# DEMANDE DE BREVET EUROPEEN

(11) **EP 3 124 322 A1**
(43) Date de publication de la demande: **01.02.2017**
(21) Numéro de dépôt: 16181316.7
(22) Date de dépôt: 26.07.2016
(51) Int. Cl.: B60N 2/48

(54) **APPUI-TÊTE POUR SIÈGE DE VÉHICULE AUTOMOBILE**

(30) Priorité: 31.07.2015 FR 1557446
(71) Demandeur: Cera TSC, 75008 Paris (FR)
(72) Inventeur: BRICE, Patrick, 54110 Hudiviller (FR)
(74) Mandataire: Sayettat, Julien Christian

(57) **Abrégé**

L'invention concerne un appui-tête (1) comprend : une partie fixe (3) comprenant deux tiges (4) et une première traverse (5) ; une partie mobile (6) comprenant une deuxième traverse (7), lesdites traverses sont reliées entre elles par une grande (8) et une petite (9) bielle ; un loquet (18) comprenant au moins une dent (20) de crantage ; un moyen ressort (21) ; une crémaillère (22) transversale agencée pour pouvoir engrener avec ladite dent ; un ressort (23) ; ledit loquet comprend une saillie (24) radiale agencée pour pouvoir prendre appui contre une première butée (25) ; une deuxième butée (26) en extrémité interne de ladite crémaillère de manière à recevoir ladite saillie en appui quand ladite deuxième traverse est ramenée en position maxi-arrière, ledit appui réalisant une rotation dudit loquet depuis sa position de non-engrènement vers sa position d'engrènement, de manière à permettre un nouveau réglage de la position de ladite deuxième traverse.

## Description

L'invention concerne un appui-tête pour siège de véhicule automobile.

Il est connu de réaliser un appui-tête pour siège de véhicule automobile, ledit appui-tête comprenant une armature, ladite armature comprenant :
- une partie fixe comprenant deux tiges sensiblement verticales de montage sur un dossier dudit siège et une première traverse transversale reliant les extrémités supérieures desdites tiges,
- et une partie mobile réglable longitudinalement selon une pluralité de positions, ladite partie mobile comprenant une deuxième traverse transversale pourvue d'un coussin d'appui, de sorte que ledit coussin soit réglable longitudinalement.

On connait notamment, par exemple du document US-2007/0013219, des appui-têtes dont le réglage est basé sur un principe de parallélogramme déformable, le réglage longitudinal du coussin entraînant une modification de son réglage en hauteur, ce qui peut obliger l'occupant du siège à rectifier ledit réglage en hauteur une fois réalisé ledit réglage longitudinal.

On connait aussi des appui-têtes ne présentant pas cet inconvénient mais dont le réglage oblige l'occupant à actionner en déverrouillage, notamment au moyen d'un bouton, un loquet de verrouillage dans la position de réglage retenue.

L'invention a pour but de pallier ces inconvénients.

A cet effet, l'invention propose un appui-tête pour siège de véhicule automobile, ledit appui-tête comprenant une armature, ladite armature comprenant :
- une partie fixe comprenant deux tiges sensiblement verticales de montage sur un dossier dudit siège et une première traverse transversale reliant les extrémités supérieures desdites tiges,
- et une partie mobile réglable longitudinalement selon une pluralité de positions, ladite partie mobile comprenant une deuxième traverse transversale pourvue d'un coussin d'appui, de sorte que ledit coussin soit réglable longitudinalement,
ledit appui-tête présentant en outre latéralement de part et d'autre les caractéristiques suivantes :
- lesdites traverses sont reliées entre elles par une grande et une petite bielle,
- ladite grande bielle présente une première extrémité, articulée selon un premier axe vertical en extrémité de ladite deuxième traverse, et une deuxième extrémité, montée en coulissement transversal sur ladite première traverse de sorte que ladite grande bielle forme avec ladite première traverse un angle externe aigu,
- ladite petite bielle présente une troisième extrémité, articulée selon un deuxième axe vertical en partie médiane de ladite grande bielle, et une quatrième extrémité, articulée selon un troisième axe vertical en extrémité de ladite première traverse,
- un loquet est monté en rotation selon un quatrième axe vertical en ladite deuxième extrémité, ledit loquet comprenant au moins une dent de crantage, ledit loquet étant actionnable entre une position d'engrènement et une position de non-engrènement,
- un moyen ressort présentant deux états stables est monté de manière à permettre le maintien dudit loquet dans l'une ou l'autre de ses positions,
- ladite première traverse est pourvue d'une crémaillère transversale agencée pour pouvoir engrener avec ladite dent de sorte que, en position de réglage retenue, ladite deuxième traverse soit bloquée dans ladite position quand un effort lui est appliqué vers l'arrière et puisse être actionnée vers l'avant par traction,
- un ressort est monté de manière à actionner ladite grande bielle en fermeture dudit angle externe,
- ledit loquet comprend une saillie radiale agencée pour pouvoir prendre appui contre une première butée disposée en extrémité externe de ladite crémaillère, ledit appui réalisant une rotation dudit loquet depuis sa position d'engrènement vers sa position de non-engrènement quand ledit loquet arrive en ladite extrémité externe, de manière à permettre par traction de ladite deuxième traverse en position maxi-avant son retour en position maxi-arrière, une deuxième butée étant prévue en extrémité interne de ladite crémaillère de manière à recevoir ladite saillie en appui quand ladite deuxième traverse est ramenée en position maxi-arrière, ledit appui réalisant une rotation dudit loquet depuis sa position de non-engrènement vers sa position d'engrènement, de manière à permettre un nouveau réglage de la position de ladite deuxième traverse.

Dans cette description, les termes de positionnement dans l'espace (haut, supérieur, inférieur, longitudinal, transversal, latéral, avant, arrière, vertical,...) sont pris en référence à l'appui-tête monté en configuration d'utilisation dans le véhicule.

L'angle externe mentionné est celui qui est vu lorsque l'appui-tête est regardé latéralement.

Lorsqu'il est mentionné une saillie radiale, le terme « radiale » est pris en relation avec le quatrième axe.

Un moyen ressort présentant deux états stables est également connu sous le terme de « ressort bi-stable ».

Avec l'agencement proposé, le réglage longitudinal du coussin n'entraine pas de modification de son réglage en hauteur, ce qui dispense l'occupant de rectifier ledit réglage en hauteur une fois réalisé ledit réglage longitudinal.

En outre, le réglage du coussin se fait par simple traction de la partie mobile, son retour en position maxi-arrière se faisant par simple mise en position maxi-avant de ladite partie mobile, ce qui évite à l'occupant d'avoir à actionner en déverrouillage, par un moyen d'actionnement tel qu'un bouton, le loquet.

D'autres particularités et avantages de l'invention apparaîtront dans la description qui suit, faite en référence aux figures jointes, dans lesquelles :
- la figure 1 est une vue en perspective partielle d'un appui-tête selon une réalisation, le coussin étant en position de réglage intermédiaire,
- les figures 2 sont des vues partielles de haut de l'appui-tête de la figure 1, le coussin étant en cours de réglage (2a), en position maxi-avant (2b), en position quasi maxi-arrière (2c), et en position maxi-arrière (2d),
- la figure 3 est une vue schématique latérale partielle de l'appui-tête des figures précédentes selon un mode de réalisation, le coussin étant en position de réglage intermédiaire,
- la figure 4 est une vue schématique latérale partielle de l'appui-tête des figures précédentes selon un autre mode de réalisation, le coussin étant en position de réglage intermédiaire.

En référence aux figures, on décrit un appui-tête 1 pour siège de véhicule automobile, ledit appui-tête comprenant une armature 2, ladite armature comprenant :
- une partie fixe 3 comprenant deux tiges 4 sensiblement verticales de montage sur un dossier dudit siège et une première traverse 5 transversale reliant les extrémités supérieures desdites tiges,
- et une partie mobile 6 réglable longitudinalement selon une pluralité de positions, ladite partie mobile comprenant une deuxième traverse 7 transversale pourvue d'un coussin d'appui, non représenté, de sorte que ledit coussin soit réglable longitudinalement,
ledit appui-tête présentant en outre latéralement de part et d'autre les caractéristiques suivantes :
- lesdites traverses sont reliées entre elles par une grande 8 et une petite 9 bielle,
- ladite grande bielle présente une première extrémité 10, articulée selon un premier axe 11 vertical en extrémité de ladite deuxième traverse, et une deuxième extrémité 12, montée en coulissement transversal sur ladite première traverse de sorte que ladite grande bielle forme avec ladite première traverse un angle externe 13 aigu,
- ladite petite bielle présente une troisième extrémité 14, articulée selon un deuxième axe vertical 15 en partie médiane de ladite grande bielle, et une quatrième extrémité 16, articulée selon un troisième axe 17 vertical en extrémité de ladite première traverse,
- un loquet 18 est monté en rotation selon un quatrième axe 19 vertical en ladite deuxième extrémité, ledit loquet comprenant au moins une - ici plusieurs - dent 20 de crantage, ledit loquet étant actionnable entre une position d'engrènement et une position de non-engrènement,
- un moyen ressort 21 présentant deux états stables est monté de manière à permettre le maintien dudit loquet dans l'une ou l'autre de ses positions,
- ladite première traverse est pourvue d'une crémaillère 22 transversale agencée pour pouvoir engrener avec ladite dent de sorte que, en position de réglage retenue, ladite deuxième traverse soit bloquée dans ladite position quand un effort lui est appliqué vers l'arrière et puisse être actionnée vers l'avant par traction,
- un ressort 23 est monté de manière à actionner ladite grande bielle en fermeture dudit angle externe,
- ledit loquet comprend une saillie 24 radiale agencée pour pouvoir prendre appui contre une première butée 25 disposée en extrémité externe de ladite crémaillère, ledit appui réalisant une rotation dudit loquet depuis sa position d'engrènement vers sa position de non-engrènement quand ledit loquet arrive en ladite extrémité externe, de manière à permettre par traction de ladite deuxième traverse en position maxi-avant son retour en position maxi-arrière, une deuxième butée 26 étant prévue en extrémité interne de ladite crémaillère de manière à recevoir ladite saillie en appui quand ladite deuxième traverse est ramenée en position maxi-arrière, ledit appui réalisant une rotation dudit loquet depuis sa position de non-engrènement vers sa position d'engrènement, de manière à permettre un nouveau réglage de la position de ladite deuxième traverse.

Selon la réalisation représentée, chaque crémaillère 22 est disposée respectivement en zone supérieure et en zone inférieure de la première traverse 5, ce qui permet d'utiliser des composants identiques (crémaillères, loquets,..) latéralement de part et d'autre.

Selon la réalisation représentée, les crémaillères 22 sont disposées en bordure de lumières 27 allongées transversalement dans lesquelles coulissent les quatrièmes axes 19.

Selon la réalisation représentée, le ressort 23 est un ressort de traction monté entre les grandes bielles 8, notamment ici au niveau des deuxièmes axes 15.

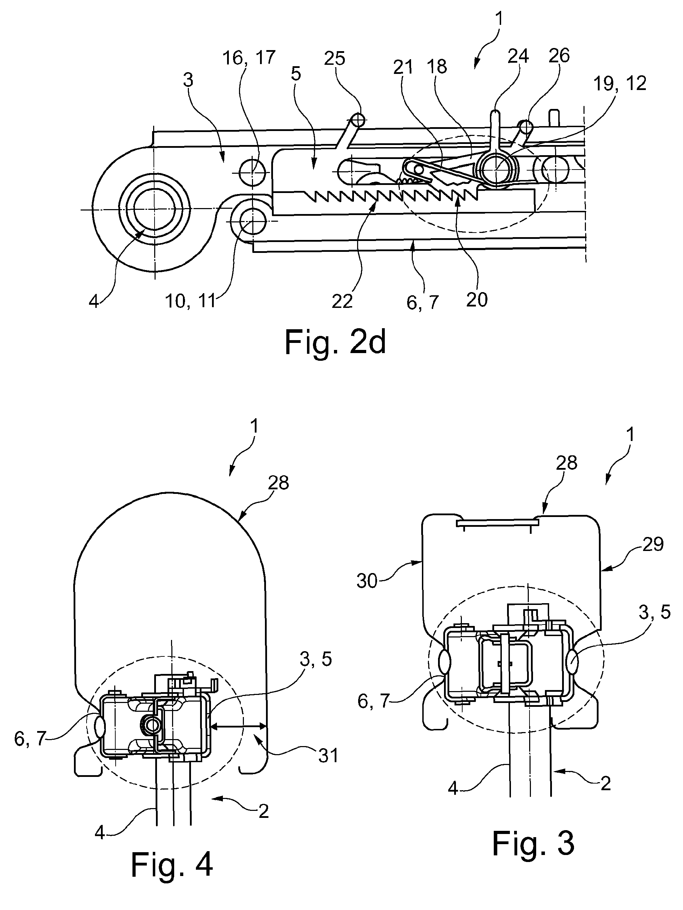

Selon le mode de réalisation, représenté en figure 3, l'appui-tête 1 comprend un boitier 28 en matériau plastique moulé, ledit boitier comprenant deux demi-coques 29,30 montées respectivement solidairement aux parties fixe 3 et mobile 6 de l'armature 2, le coussin étant disposé en recouvrement de la demi-coque 30 solidaire de ladite partie mobile.

Selon un autre mode de réalisation, représenté en figure 4, l'appui-tête 1 comprend un boitier 28 creux monobloc en matériau plastique moulé, la partie mobile 6 de l'armature 2 étant montée à l'intérieur dudit boitier, le coussin étant disposé en recouvrement dudit boitier, un espace 31 de débattement étant prévu à l'intérieur dudit boitier pour permettre le réglage longitudinal dudit coussin sans créer d'interférence entre ledit boitier et la partie fixe 3 de ladite armature.

On explicite enfin le fonctionnement de l'appui-tête 1 en réglage longitudinal du coussin.

A partir de la position maxi-arrière de la deuxième traverse 7, on effectue une traction vers l'avant sur le coussin.

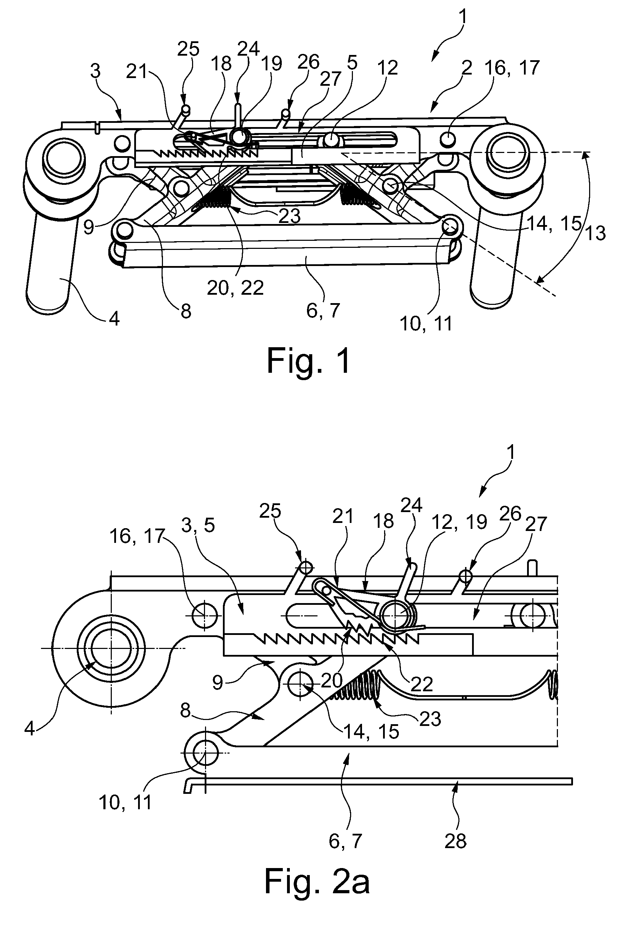

La deuxième traverse 7 transmet aux bielles 8,9 un effort qui actionne le quatrième axe 19 en translation transversale, ainsi que le loquet 18 (figure 2a).

Sous l'effet de cette translation, les dents 20 du loquet 18 engrènent avec la crémaillère 22, et cela sur toute la course ce qui permet le réglage longitudinal du coussin.

Le retour en position maxi-arrière se fait à partir de la position maxi-avant, sans actionnement d'un bouton.

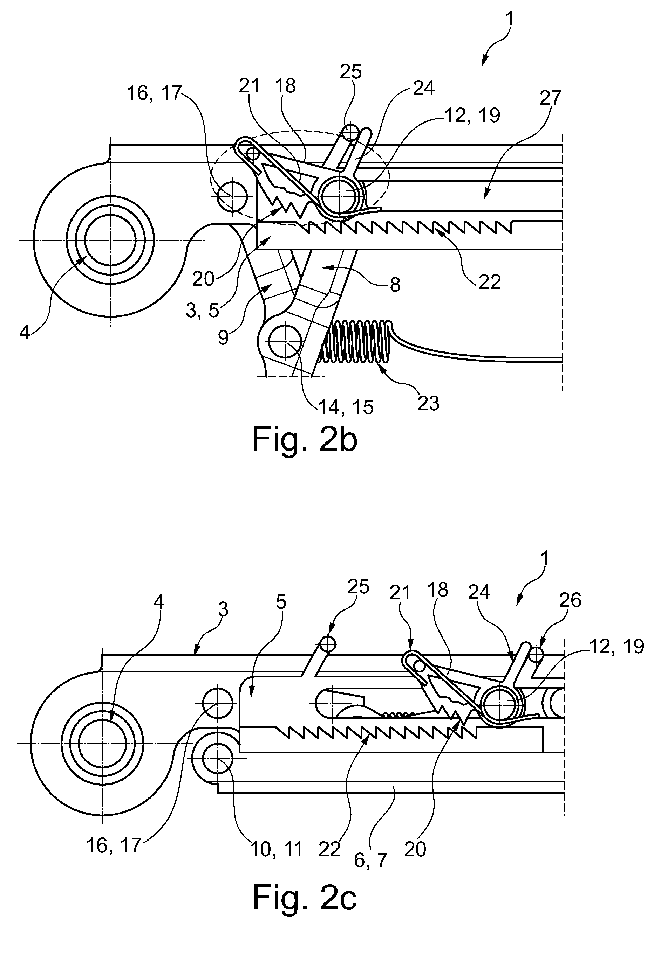

La saillie 24 du loquet 18 vient en contact avec la première butée 25 et l'entraine en rotation jusqu'à ce que le moyen ressort 21 bistable le bascule en position de non-engrènement (figure 2b).

Le ressort de traction 23 tire sur les grandes bielles 8 et ramène la deuxième traverse 7 vers sa position maxi-arrière.

La saillie 24 bute alors contre la deuxième butée 26 (figure 2c) pour amener le loquet 18 en position d'engrènement (figure 2d) dans laquelle il est maintenu par le moyen ressort 21, ce qui permet à nouveau le réglage longitudinal du coussin.

## Revendications

1. Appui-tête (1) pour siège de véhicule automobile, ledit appui-tête comprenant une armature (2), ladite armature comprenant :
• une partie fixe (3) comprenant deux tiges (4) sensiblement verticales de montage sur un dossier dudit siège et une première traverse (5) transversale reliant les extrémités supérieures desdites tiges,
• et une partie mobile (6) réglable longitudinalement selon une pluralité de positions, ladite partie mobile comprenant une deuxième traverse (7) transversale pourvue d'un coussin d'appui, de sorte que ledit coussin soit réglable longitudinalement,
ledit appui-tête étant **caractérisé en ce qu'**il présente latéralement de part et d'autre les caractéristiques suivantes :
• lesdites traverses sont reliées entre elles par une grande (8) et une petite (9) bielle,
• ladite grande bielle présente une première extrémité (10), articulée selon un premier axe (11) vertical en extrémité de ladite deuxième traverse, et une deuxième extrémité (12), montée en coulissement transversal sur ladite première traverse de sorte que ladite grande bielle forme avec ladite première traverse un angle externe (13) aigu,
• ladite petite bielle présente une troisième extrémité (14), articulée selon un deuxième axe (15) vertical en partie médiane de ladite grande bielle, et une quatrième extrémité (16), articulée selon un troisième axe (17) vertical en extrémité de ladite première traverse,
• un loquet (18) est monté en rotation selon un quatrième axe (19) vertical en ladite deuxième extrémité, ledit loquet comprenant au moins une dent (20) de crantage, ledit loquet étant actionnable entre une position d'engrènement et une position de non-engrènement,
• un moyen ressort (21) présentant deux états stables est monté de manière à permettre le maintien dudit loquet dans l'une ou l'autre de ses positions,
• ladite première traverse est pourvue d'une crémaillère (22) transversale agencée pour pouvoir engrener avec ladite dent de sorte que, en position de réglage retenue, ladite deuxième traverse soit bloquée dans ladite position quand un effort lui est appliqué vers l'arrière et puisse être actionnée vers l'avant par traction,
• un ressort (23) est monté de manière à actionner ladite grande bielle en fermeture dudit angle externe,
• ledit loquet comprend une saillie (24) radiale agencée pour pouvoir prendre appui contre une première butée (25) disposée en extrémité externe de ladite crémaillère, ledit appui réalisant une rotation dudit loquet depuis sa position d'engrènement vers sa position de non-engrènement quand ledit loquet arrive en ladite extrémité externe, de manière à permettre par traction de ladite deuxième traverse en position maxi-avant son retour en position maxi-arrière, une deuxième butée (26) étant prévue en extrémité interne de ladite crémaillère de manière à recevoir ladite saillie en appui quand ladite deuxième traverse est ramenée en position maxi-arrière, ledit appui réalisant une rotation dudit loquet depuis sa position de non-engrènement vers sa position d'engrènement, de manière à permettre un nouveau réglage de la position de ladite deuxième traverse.

2. Appui-tête selon la revendication 1, **caractérisé en ce que** chaque crémaillère (22) est disposée respectivement en zone supérieure et en zone inférieure de la première traverse (5).

3. Appui-tête selon l'une des revendications 1 ou 2, **caractérisé en ce que** les crémaillères (22) sont disposées en bordure de lumières (27) allongées transversalement dans lesquelles coulissent les quatrièmes axes (19).

4. Appui-tête selon l'une quelconque des revendications 1 à 3, **caractérisé en ce que** le ressort (23) est un ressort de traction monté entre les grandes bielles (8), notamment au niveau des deuxièmes axes (15).

5. Appui-tête selon l'une quelconque des revendications 1 à 4, **caractérisé en ce qu'**il comprend un boitier (28) en matériau plastique moulé, ledit boitier comprenant deux demi-coques (29,30) montées respectivement solidairement aux parties fixe (3) et mobile (6) de l'armature (2), le coussin étant disposé en recouvrement de la demi-coque (30) solidaire de ladite partie mobile.

6. Appui-tête selon l'une quelconque des revendications 1 à 4, **caractérisé en ce que** qu'il comprend un boitier (28) creux monobloc en matériau plastique moulé, la partie mobile (6) de l'armature (2) étant montée à l'intérieur dudit boitier, le coussin étant disposé en recouvrement dudit boitier, un espace (31) de débattement étant prévu à l'intérieur dudit boitier pour permettre le réglage longitudinal dudit coussin sans créer d'interférence entre ledit boitier et la partie fixe (3) de ladite armature.
